# EUROPEAN PATENT APPLICATION

(11) **EP 4 708 932 A1**
(43) Date of publication of application: **11.03.2026**
(21) Application number: 24797466.0
(22) Date of filing: 26.04.2024
(51) Int. Cl.: H04W 4/40, H04W 4/38, B60W 60/00, B60W 30/095

(54) **METHOD FOR TRANSMITTING MESSAGE IN WIRELESS COMMUNICATION SYSTEM AND APPARATUS THEREFOR**

(30) Priority: 27.04.2023 US 202363462517 P
(71) Applicant: LG Electronics Inc., Yeongdeungpo-gu Seoul 07336 (KR)
(72) Inventor: SEO, Hanbyul, Seoul 06772 (KR); KIM, Heejin, Seoul 06772 (KR)
(74) Representative: Mooser, Sebastian Thomas
(86) International application number: PCT/KR2024/005679
(87) International publication number: WO 2024/225812

(57) **Abstract**

Disclosed are a method in which a network transmits a message in a wireless communication system, and an apparatus therefor, according to various embodiments. Disclosed are a method and an apparatus therefor, the method comprising the steps of: detecting multiple objects including a first object and a second object; determining, among the multiple objects, at least one object having a change in object mobility equal to or greater than a specific threshold; and transmitting a message including object information for the at least one object including the first object, wherein, on the basis that a probability by which the first object changes a driving path due to the second object is equal to or greater than a specific threshold probability, the message further comprises object information about the second object even if a change in the mobility of the second object is less than the specific threshold.

## Description

### TECHNICAL FIELD

The present disclosure relates to a method of transmitting a message including object information about an object detected by a network in a wireless communication system and an apparatus therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

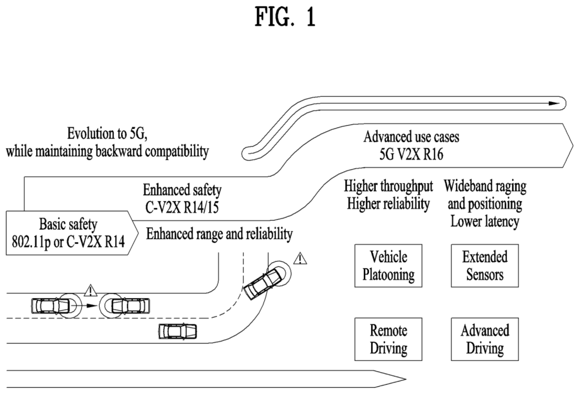

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### Technical Problem

An object of the present disclosure is to provide a method of transmitting and receiving messages more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### Technical Solution

According to an aspect, a method of transmitting a message by a network in a wireless communication system includes detecting a plurality of objects including a first object and a second object, determining at least one object having a mobility change greater than or equal to a specific threshold from among the plurality of objects, and transmitting a message including object information for the at least one object including the first object, wherein, based on a probability that the first object changes a driving path due to the second object being greater than or equal to a specific threshold probability, the message further includes object information for the second object even if the mobility change of the second object is less than the specific threshold probability.

The message may further include driving obstruction information indicating that the first object is in a driving obstruction relationship with the second object as confirmation information of object information for the first object.

Object information for the second object may be included in the message as extended information of object information for the first object.

Transmission of the message may be triggered based on a probability of a driving path of the first object being changed by the second object being greater than or equal to the specific threshold probability.

A period of the message may be determined based on a probability of the driving path of the first object being changed by the second object being greater than or equal to the specific threshold probability.

The first object may be a device of a road user, and the second object may be an obstacle located on a road.

The message may further include at least one piece of information among a distance between the first object and the second object, a speed of the first object and the second object, a moving direction of the first object and the second object, a time-to-collision (TTC) between the first object and the second object, or a time-to-obstruction (TTO) between the first object and the second object.

Based on a probability of a change in a driving path of the first object by the second object being greater than or equal to the specific threshold probability, object information for the first object and object information for the second object may always be included together in one message.

According to another aspect, a non-transitory computer-readable storage medium having recorded thereon instructions for performing the method of transmitting the message may be provided.

According to another aspect, a network may be provided that performs the method of transmitting the message.

According to another aspect, a processing device may be provided for controlling a network that performs the method of transmitting the message.

According to another aspect, a method of receiving a message by a user equipment (UE) in a wireless communication system includes receiving from a network a message including first object information for at least one object having a mobility change greater than or equal to a specific threshold, based on the message further including second object information for the second object having a mobility change less than the specific threshold, determining the second object as a driving obstruction object, and determining whether to change a driving path based on the first object information and the second object information.

According to another aspect, a non-transitory computer-readable storage medium having recorded thereon instructions for performing the method of receiving the message may be provided.

According to another aspect, a UE performing the method of receiving the message may be provided.

According to another aspect, a processing device may be provided for controlling a UE to perform the method of receiving the message.

### Advantageous Effects

According to an embodiment of the present disclosure, transmission and reception of messages in a wireless communication system may be performed more accurately and efficiently.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 shows a communication structure providable in a 6G system, based on an embodiment of the present disclosure.
FIG. 7 shows an electromagnetic spectrum, based on an embodiment of the present disclosure.
FIG. 8 shows an example of an NTN typical scenario based on a transparent payload, based on an embodiment of the present disclosure.
FIG. 9 shows an example of an NTN typical scenario based on a regenerative payload, based on an embodiment of the present disclosure.
FIG. 10 shows an example of a sensing operation, based on an embodiment of the present disclosure.
FIG. 11 illustrates a radio protocol architecture for SL communication.
FIG. 12 illustrates UEs performing V2X or SL communication.
FIG. 13 illustrates resource units for V2X or SL communication.
FIG. 14 shows an example of a BWP, based on an embodiment of the present disclosure.
FIG. 15 shows a procedure of performing V2X or SL communication by a UE based on a resource allocation mode, based on an embodiment of the present disclosure.
FIG. 16 is a diagram illustrating a method of transmitting a message including object information by a network.
FIG. 17 is a diagram for explaining a method of receiving a message including object information by a UE.
FIG. 18 illustrates a communication system applied to the present disclosure.
FIG. 19 illustrates wireless devices applicable to the present disclosure.
FIG. 20 illustrates another example of a wireless device to which the present disclosure is applied.
FIG. 21 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

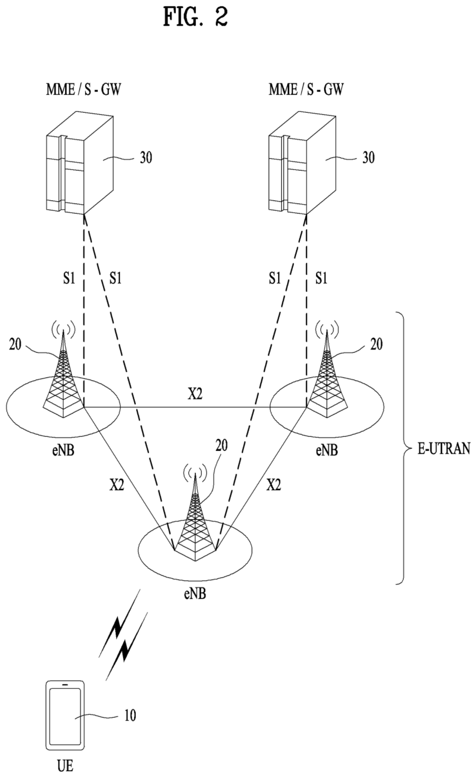

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

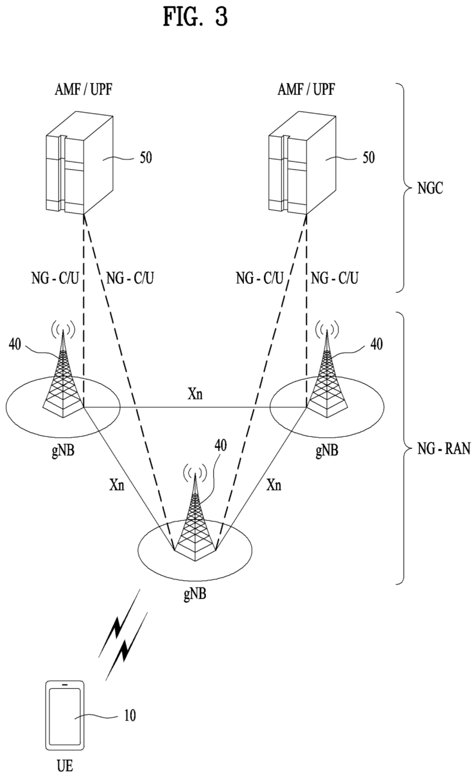

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

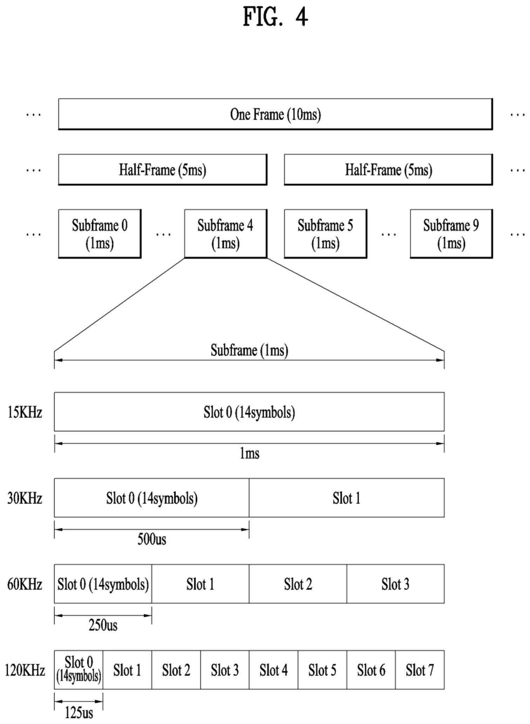

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

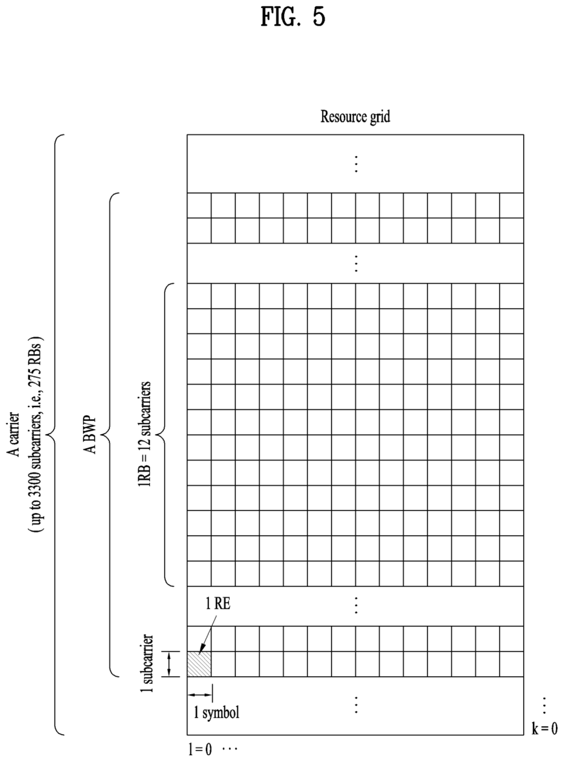

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

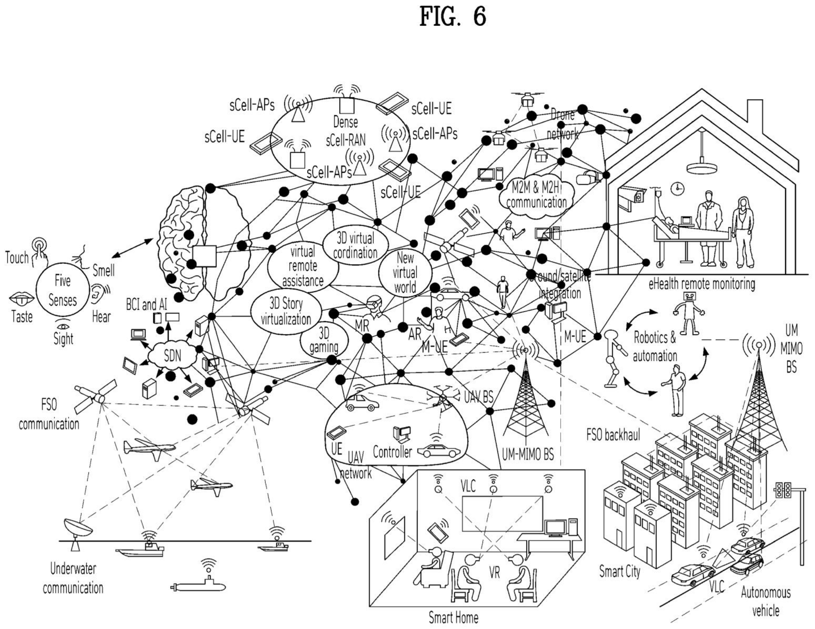

FIG. 6 shows a communication structure providable in a 6G system, based on an embodiment of the present disclosure. The embodiment of FIG. 6 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". Al may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.
- Artificial Intelligence (Al): When Al is introduced to communication, real-time data transmission may be simplified and improved. Al may determine a method of performing complicated target tasks using countless analysis. That is, Al may increase efficiency and reduce processing delay. Operation consuming time such as handover, network selection, and resource scheduling immediately performed by using Al. Al may also play an important role in M2M, machine-to-human, and human-to-machine. In addition, Al may be a prompt communication in brain computer interface (BCI). An Al based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

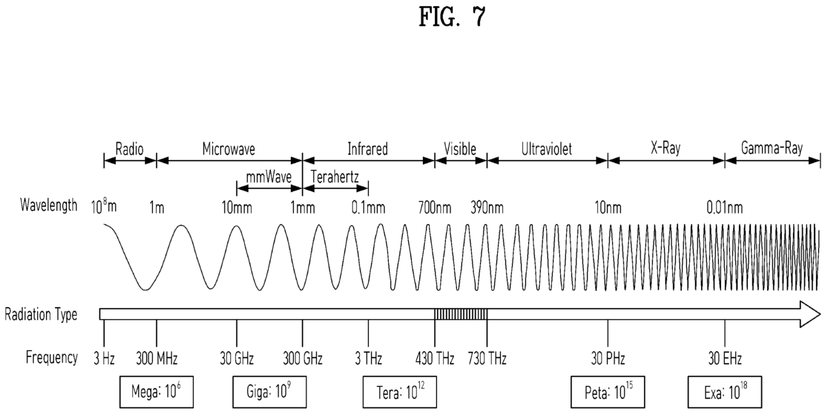

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

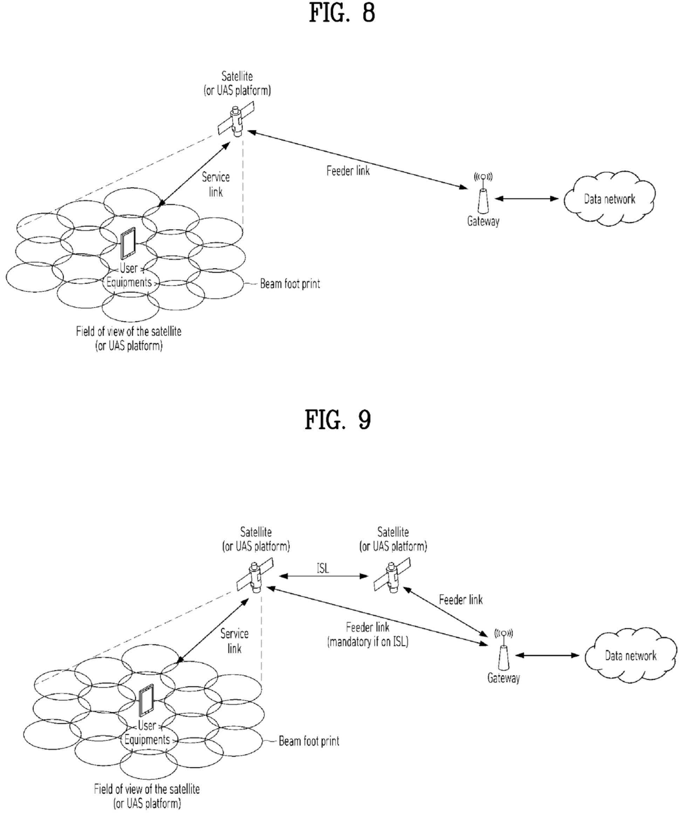

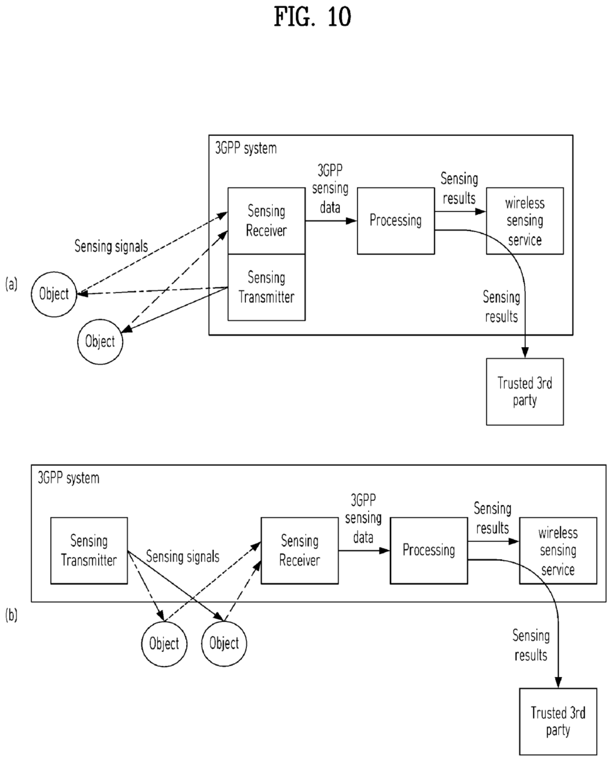

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

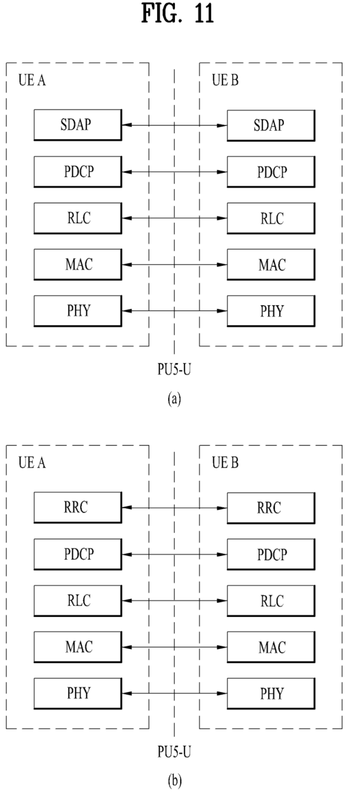

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

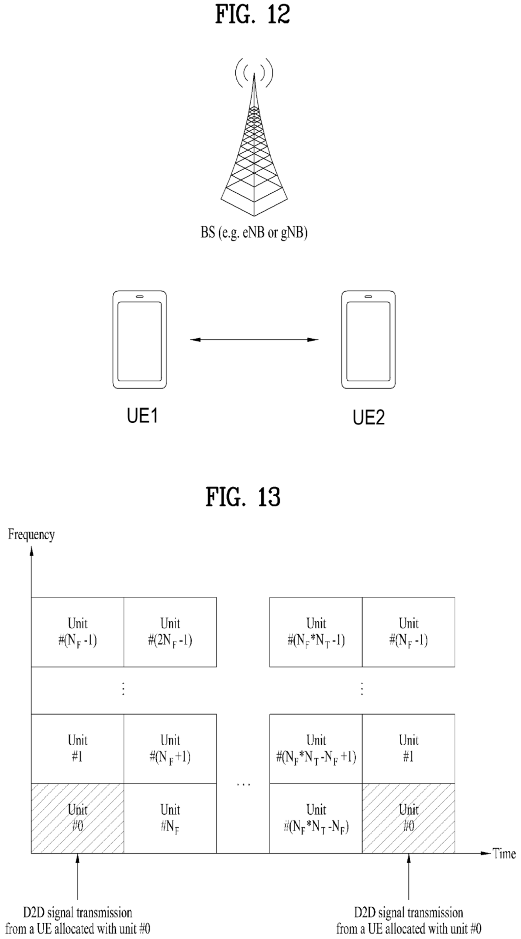

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

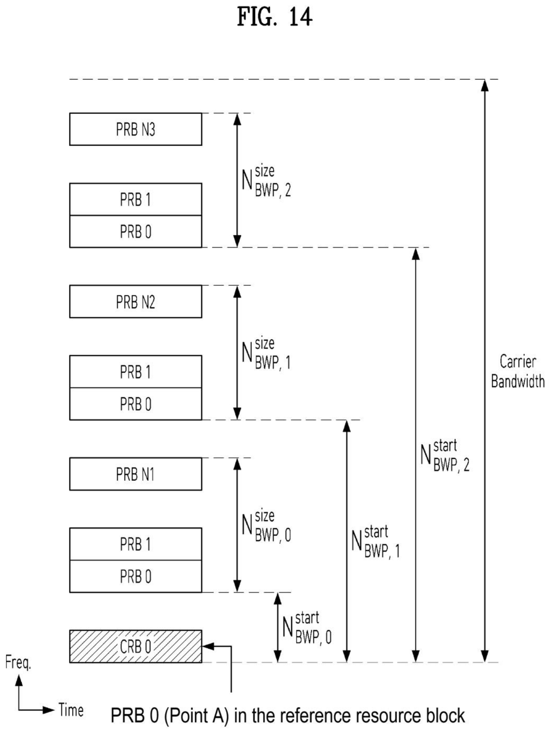

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start} _{BWP} from the point A, and a bandwidth N^{size} _{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

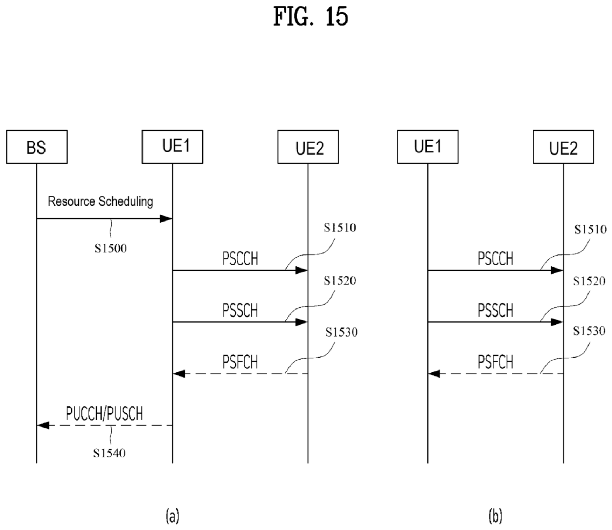

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subChannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

A SoftV2X system is a system in which a SoftV2X server, through V2X communication using a UU interface, receives a VRU message or a personal safety message (PSM) from a vulnerable road user (VRU) or a V2X vehicle, transmits information on a surrounding VRU or vehicle based on the VRU message or the PSM message, or analyzes a road condition on which surrounding VRUs or vehicles move, and transmits a message to nearby VRUs or vehicles to notify them of collision warnings, and the like based on the analyzed information. Here, the VRU message or PSM message may be a message transmitted to the SoftV2X server through the UU interface and may include mobility information about a VRU, such as the location, moving direction, moving path, and speed of the VRU. That is, the SoftV2X system uses a method of receiving mobility information of VRUs and/or vehicles related to V2X communication through the UU interface and controlling a driving path of the VRU, VRU movement flow, and the like based on the received mobility information received by the SoftV2X server such as a network. Alternatively, the SoftV2X system may be configured in relation to V2N communication.

A UE or pedestrian equipment (VRU device) that has difficulty performing direct communication (PC5 or DSRC) related to V2X communication may provide or receive driving information and mobility information to surrounding vehicles or VRUs through a SoftV2X system based on a UU interface. Through this, the UE or pedestrian equipment (VRU device) that is difficult to perform the direct communication (PC5 or DSRC) may be protected from surrounding vehicles.

### Method of transmitting information related to the possibility of interference with road user traffic based on V2X

Information on an object detected by a sensor by a UE/infrastructure (e.g., number, type, size, and location of detected object) may be transmitted through a message for sensor data sharing currently defined by ETSI, SAE, and the like (e.g., collective perception message (CPM), and sensor data sharing message (SDSM)).

The UE/infrastructure/server/cloud/MEC/RSU may sense/detect the surrounding UE/environment by using the sensor it has (or is linked to), or may obtain surrounding environment information such as the presence, type, size, location, speed/acceleration/heading, movement information (e.g., path history/prediction) of a UE/infrastructure/obstacle on a road (e.g., fallen objects on the road, road construction sites, objects that obstruct the passage of road users, and/or other road users) obtained from information/messages received from surrounding UEs. The UE/infrastructure/server/cloud/MEC/RSU may analyze/synthesize the surrounding environment information to calculate/determine whether, among the road users and/or obstacles recognized by the UE/infrastructure/server/cloud/MEC/RSU, traffic interference/obstruction may potentially occur (e.g., within a specific time) between road users (and/or between road users and obstacles). The UE/infrastructure/server/cloud/MEC/RSU may notify road users via V2X that interference/obstruction may occur (or, interference/obstruction situation may occur) in its traffic (within a specific time). In this case, information about the possibility of interference/obstruction may help responding road users to proactively prepare for future accidents, traffic obstructions/delays, and may also contribute to improving road traffic efficiency by preventing accidents and/or traffic obstructions/delays in advance.

The "road user" described above may include not only vehicles, VRUs (e.g., pedestrians, bicycles, wheelchairs, kickboards, or road workers), but also robots driving on the road. Below are some recent discussions about robots driving on the road.
- Due to social issues and changes such as the increasing proportion of last-mile delivery costs, rising labor costs, and the ongoing COVID-19 pandemic, the emergence of unmanned ground robots that provide services such as food/grocery delivery, road maintenance/cleaning, parcel delivery, and patrol has accelerated. Active discussions have begun to take place in each country regarding regulations that may allow unmanned ground robots to operate on public roads and the conditions of the unmanned ground robots.
- For example, in the United States, the first law allowing the use of personal delivery devices (PDDs) is passed in Virginia in 2017, and currently, 14 states, including Pennsylvania, Texas, Utah, Florida, and Washington, have legislated to allow the use of delivery robots. In Pennsylvania, delivery robots need to be capable of both autonomous and remote driving, and need to drive no faster than 12 mph in pedestrian zones (e.g., crosswalks and sidewalks) and no faster than 35 mph on the roadway and shoulder. When a delivery robot drives in a pedestrian area, the delivery robot needs to ensure the right of way of pedestrians, cyclists, and the like by taking an yielding operation to prevent collisions/obstructions when collisions/obstructions are expected. Although laws vary slightly from state to state in the United States, the laws generally require that when a delivery robot drives in a pedestrian zone, the delivery robot needs to give the pedestrian the right of way before the delivery robot, or that the delivery robot needs to yield the right of way to the pedestrian. This is applied almost identically to regulations regarding delivery robots (or ground/road-driving robots) in countries such as Japan and the UK. In the case of Korea, there are no regulations related to ground/driving robots yet, and thus the delivery robots or unmanned driving robots may be considered vehicles. Therefore, under the Pedestrian Safety Act, driving of the delivery robots or unmanned driving robots on sidewalks and crosswalks is not permitted. However, the Ministry of Trade, Industry and Energy deliberated and approved the "Robot Industry Preemptive Regulatory Innovation Roadmap Implementation Plan" for preemptive deregulation in 2021. According to the roadmap, plans are in place to allow outdoor delivery robots to operate in city parks starting in 2022, on sidewalks starting in 2023, and to demonstrate high-speed driving methods and improve the system starting in 2025. Therefore, delivery robots may soon drive on public roads in Korea, share the roads with pedestrians and/or vehicles, and, as in the US/UK/Japan, delivery robots may coexist with pedestrians/vehicles on public roads. Therefore, research may be needed on a method of driving efficiently and safely between the delivery robot or unmanned driving robot and the pedestrian.
- That is, the robot should not interfere with the traffic of surrounding road users (e.g., Vulnerable Road Users (VRUs), pedestrians, bicycles), and thus it is necessary for the robot driving on the road to inform surrounding robots (and/or surrounding VRUs) of information related to the interference/obstruction of traffic when a situation of interference/obstruction of traffic of road users is expected to occur.

Hereinafter, a method of transmitting information related to the possibility of obstructing road users based on V2X is described in detail.

The UE/infrastructure/servers/cloud/MEC/RSUs may obtain surrounding information such as surrounding UEs, surrounding devices, obstacles (e.g., road facilities, fallen objects, road construction sites, and other objects that obstruct the passage of road users), road/surrounding environment, presence of UE/infrastructure/obstacle, object information (type, size, location, speed/acceleration/heading of device/UE, and movement information (e.g., path history/prediction)) from their own sensors (or linked sensors) and messages from surrounding UEs. The UE/infrastructure/server/cloud/MEC/RSU may determine, based on the surrounding information, whether a potential (e.g., within a specific time) driving obstruction is predicted among road users and/or obstacles recognized by the UE/infrastructure/server/cloud/MEC/RSU. When it is determined/judged that the obstacle may cause interference/obstruction to the road user's traffic, the UE/infrastructure/server/cloud/MEC/RSU may transmit a message (CPM, or the like) for sharing sensor data including driving obstruction information regarding interference/obstruction to the road user's traffic/driving caused by the obstacle to other UEs (and surrounding UEs). The UE/infrastructure/server/cloud/MEC/RSU may generally transmit a message for sharing sensor data including object information about a road user having a mobility change (speed, location change, or moving distance) exceeding a preset threshold change amount among the detected/identified plurality of road users to reduce the overhead of the message. In this case, when the obstacle is an object fallen on the road, or the like and has a mobility change less than a preset threshold change amount, the UE/infrastructure/server/cloud/MEC/RSU may generally transmit a message that does not include object information about the obstacle.

Here, examples of situations in which the UE/infrastructure/server/cloud/MEC/RSU notifies the possibility of occurrence of traffic interference/obstruction may include (1) a situation in which the passage of a vehicle/VRU/robot interferes (or is expected to interfere) with the passage of another vehicle/VRU/robot, and (2) a situation in which driving of a vehicle/VRU/robot is interfered (or is expected to interfere) with by an obstacle on a (semi-)static road (e.g., road facilities, fallen objects, road construction sites, objects parked on the road (vehicles, bicycles, or kickboards), or other objects that interfere with the passage/driving of road users).

The "interference/obstruction of road user driving/traffic" below may include general vehicle-pedestrian or pedestrian-to-pedestrian collisions (or risk of collisions), but may also include events/concepts different from vehicle-pedestrian collisions/pedestrian-to-pedestrian collisions. For example, driving obstruction of a road user may imply a potential collision risk between road users (or between a road user and an obstacle), but may also include a situation in which the road/space is occupied by an obstacle, making it difficult for the road user to proceed/drive, or an event of obstruction of the progress/driving of the driving user is predicted to occur (e.g., a case in which the predicted probability of the driving path of the road user being changed by the obstacle is greater than or equal to a specific threshold probability). In the case of obstruction of driving of a road user due to an obstacle, it may be the case that the obstacle occupies (or the road user is parked) the space that a specific road user (or a device/UE of a specific road user) attempts to pass through. Alternatively, cases of driving obstruction by other road users may include cases in which the driving speed of a specific road user is too fast/slow, causing difficulty for other road users, or in which the driving of another road user poses a threat to the specific road user. Alternatively, cases of driving obstruction of a road user by obstacles/other road users may also include cases in which a driving path/route between road users overlap (in which different road users intend to drive on the same path (almost) simultaneously).

Hereinafter, the "detected object" may be an object detected by a UE/infrastructure/server/cloud/MEC/RSU by using a sensor that it has (or is connected to), and/or an object obtained/detected using received information/message (e.g., an object obtained/detected based on the presence of a UE/infrastructure/obstacle on the road included in the received information/message, object information (type, size, location, speed/acceleration/heading of the UE/device, movement information (e.g., path history/prediction)), and the like). Hereinafter, the detection object may include an object that is an obstacle that may exist on the road other than a road user (road facilities, fallen objects, road construction sites, other objects that obstruct the passage of road users).

### 1. Detection of obstruction to driving/traffic of road users by detected objects (or obstacles) and transmission of messages

In detail, the UE/infrastructure/server/cloud/MEC/RSU may detect the presence of a road user (or a device/UE of a road user) approaching a detected object or of which passage/driving is expected to be obstructed by the detected object (or obstacle). The UE/infrastructure/server/cloud/MEC/RSU may generate a message related to the driving obstruction when a road user is detected (produced) that is predicted to be obstructed by an obstacle (e.g., road facilities, fallen objects, road construction sites, objects parked on the road (vehicles, bicycles, and scooters), or other objects that obstruct the passage/driving of road users). That is, when a predicted road user who is obstructed by the detected object is detected, the UE/infrastructure/server/cloud/MEC/RSU may generate/transmit a message for sharing sensor data (e.g., SAE SDSM, and ETSI ITS CPM) or a separate warning message (e.g., ETSI DENM) that includes information about the road user in the form of object information.

For example, when a road user causing driving obstruction is detected, the UE/infrastructure/server/cloud/MEC/RSU may determine whether to transmit a message for sharing sensor data (hereinafter, a sensor data sharing message) or a warning message based on the distance, speed, acceleration, heading, time-to-collision (TTC), time-to-obstruction (TTO), and the like between the detected object (or obstacle) and the road user.
(1) The UE/infrastructure/server/cloud/MEC/RSU may generate/transmit a warning message when the following conditions are satisfied, and may generate/transmit a sensor data sharing message when the conditions below are not satisfied.
   A. When a distance between two objects (or between a detected object and a road user), TTC and/or TTO, is less than or equal to a first specific threshold (preset).
   B. When there is no (static) object that physically separates the space between the two objects (or between the detected object and the road user), such as a median strip or a barrier bar for dividing the sidewalk and the roadway.
   C. When one of the two objects (or the detected object and the road user) is a pedestrian (and/or a wheelchair) and the other is a vehicle (e.g., a car/bicycle/motorcycle) and/or a robot.
   D. When two objects (or, detected objects and road users) drive in a direction facing each other and/or the absolute/relative speed of the two objects (or, detected objects and road users) is greater than or equal to a specific threshold speed.

However, a sensor data sharing message may be generated only when both objects (or, a detected object and a road user) are pedestrians, or when both objects are pedestrians and the following specific conditions are satisfied. Here, specific conditions may include ① when the distance between two pedestrians, TTC/TTO, is less than or equal to a second specific threshold (which is lower than the first specific threshold applied in (i)) and ② when driving in an environment in which it is difficult for two pedestrians (or two road users) to recognize each other (when line-of-sight (LOS) is not ensured, such as when two people approach from different directions (in the vertical direction) around the corner of a building). Alternatively, a sensor data sharing message may be generated only if one of the two objects is an obstacle as described above and the following specific conditions are satisfied. Here, the specific conditions may include ① when the distance between the road user device/UE and the obstacle, TTC/TTO, is less than or equal to a second specific threshold (lower than the first specific threshold applied in (i)) and ② when driving in an environment in which it is difficult for the road user device/UE and the obstacle to recognize each other (when the line-of-sight (LOS) of the road user is not ensured, such as when the road user approaches (in the vertical direction) around the corner of a building).

Alternatively, a sensor data sharing message may be generated when one of the two objects (or the detected object and the road user) is a VRU (e.g., a pedestrian, a cyclist, a wheelchair user) and the other is a robot.
(2) In "(1)" above, "generation of sensor data sharing message" and "generation of warning message" may be generation of messages according to additional definitions of the conditions (specific conditions) described in "(1)" in addition to the generation trigger conditions of messages separately defined for a service that provides a correlation between messages defined in a given scenario (e.g., ITS standard) and/or collision/path obstruction between detected objects. Here, the message defined in a given scenario (e.g., ITS standard) may be SDSM of Society of Automotive Engineers (SAE), CPM of ETSI Intelligent Transport Systems (ITS), and Decentralized Environment Notification Message (DENM).
(3) In a sensor data sharing message, information about detected objects and road users in a driving obstruction relationship may be expressed as object information based on a format expressing object information of a message for sensor data sharing (e.g., object information container of ETSI CPM).

2. The sensor data sharing message may include object information about a detected object detected by the sensor. In this case, at least one of the conditions defined in "(1)" may be a reference for determining whether information about a specific object (e.g., a road user or an obstacle) is included in the sensor data sharing message, and/or for determining a priority between the detected object and the specific object. Here, information about the specific object may include user device/terminal/obstacle type, location, speed/acceleration/heading, predicted path, collision risk, and probability/possibility of obstruction.

Alternatively, the UE/infrastructure/server/cloud/MEC/RSU may generate/transmit a sensor data sharing message including object information about at least one object selected/determined from among the plurality of objects based on mobility information (e.g., speed) of each of the plurality of sensed/detected objects. For example, the UE/infrastructure/server/cloud/MEC/RSU may generate/transmit a sensor data sharing message including object information about at least one object among multiple objects sensed/detected having a mobility change amount greater than or equal to a preset threshold change amount. However, if an object for a road user of which driving is predicted to be obstructed by an obstacle is included among the multiple objects, the UE/infrastructure/server/cloud/MEC/RSU may additionally include object information about the obstacle in the message even if the mobility change amount of the obstacle is less than a preset threshold change amount. The UE/infrastructure/server/cloud/MEC/RSU may set a priority for objects that are in a driving obstruction relationship among multiple objects (i.e., the obstacle and the road user of which driving is obstructed by the obstacle) higher than the priorities of the remaining objects. In this case, the UE/infrastructure/server/cloud/MEC/RSU may include object information about objects in a driving obstruction relationship in the sensor data sharing message with priority over object information about the remaining objects.

3. As described in 1-(3) above, the UE/infrastructure/server/cloud/MEC/RSU may provide existence/object information about road users and detected objects (e.g., obstacles or other road users) in the driving obstruction relationship in the form of object information detected by the sensor. In this case, object information about a road user who approaches the detected object or is predicted to be obstructed by the detected object and object information about the detected object may be included in a sensor data sharing message in the form of two object information having different object IDs (e.g., object ID: A or object ID: B). Information about whether the specific road user is likely to approach the detected object or be obstructed from driving by the detected object (or driving obstruction information) may be included in the sensor data sharing message as additional information of the sensor data sharing message.

For example, the UE/infrastructure/server/cloud/MEC/RSU may further include information about a road users and obstacle (or other road users) in a driving obstruction relationship as additional data elements/fields in the sensor data sharing message, as described below. For convenience of explanation, the detected object (or obstacle) described above and the road user are defined as object A and object B.
A. Distance between object A and object B
B. Absolute/relative velocities of objects A and B
C. Heading direction of object A and object B
D. TTC and/or TTO between object A and object B
E. (When the UE/infrastructure/server/cloud/MEC/RSU determines whether object A obstructs driving of object B based on A to D, and the like) Whether object A and object B are in a relationship in which they are close to each other (and/or may obstruct each other's traffic) (i.e., driving obstruction relationship), whether an object with the driving obstruction relationship exists, and/or an object ID (e.g., bit (string) or indicator))

For example, the UE/infrastructure/server/cloud/MEC/RSU may further include the ID of object A, the absolute/relative position, absolute/relative speed, and heading of object A, and TTC/TTO between object A and object B as related (extended) information of object B in the sensor data sharing message, thereby notifying surrounding UEs/devices that object A is an object that obstructs the passage of object B (e.g., an obstacle or other road users). In other words, even if the mobility change amount of object A is less than a specific threshold change amount (in principle, object information of object A is not included in the sensor data sharing message), if there is a concern that object A may obstruct driving of object B (i.e., driving obstruction relationship), the UE/infrastructure/server/cloud/MEC/RSU may further include object information about object A as extended information of object B in the sensor data sharing message.

4. In "1 to 3" described above, the sensor data sharing message may further include information about a driving obstruction relationship between the two objects (i.e., driving obstruction information) while expressing information about a detected object in a driving obstruction relationship and information about a road user (having different object IDs) in the form of information about two objects detected/sensed by a sensor, and the like. In this case, it may be efficient to include object information for the two objects together in one sensor data sharing message as described above. For example, when a UE/infrastructure/server/cloud/MEC/RSU needs to include object information for only some of a plurality of objects it has recognized/detected/sensed (due to channel congestion, message size constraints, and the like) in the sensor data sharing message, the UE/infrastructure/server/cloud/MEC/RSU may include object information for at least one object among the plurality of objects in the single sensor data sharing message based on priorities between the objects. In this case, when transmission of the sensor data sharing message is triggered based on conditions A to D in "1", the two objects that satisfy conditions A to D in "1" or the two objects in "3" (or, the two objects in a driving obstruction relationship) may have a higher priority than other objects, and the object information for the two objects may be included together in the sensor data sharing message with priority over the object information for the other objects.

Alternatively, a period of the sensor data sharing message may be controlled/determined based on whether object information for the two objects in the driving obstruction relationship is included. For example, a period of a sensor data sharing message that includes object information about an obstacle (pedestrian or other road user) that has a driving obstruction relationship with a road user may be shorter than a period of a sensor data sharing message that includes object information (only) about a general obstacle (or, pedestrian or other road user) that does not have a driving obstruction relationship with a road user.

Alternatively, the sensor data sharing message containing object information about other road users/obstacles that do not have a driving obstruction relationship with a road user may be transmitted more frequently/periodically than sensor data sharing messages including object information about non-pedestrian vehicles (e.g., vehicles, bicycles, motorcycles, kickboards, or other road users/obstacles) that do not have a driving obstruction relationship with road users.

Alternatively, object information about a road user/obstacle may be included in the next sensor data sharing message only if the change in position, ground speed, orientation, heading, acceleration, angular velocity, and kinematic state is greater than or equal to a specific threshold change amount (=Value_threshold) compared to the object-related information about other road users/obstacles included in the previously transmitted sensor data sharing message as described above. Here, a specific threshold change amount (=Value_threshold) for other road users/obstacles that have a driving obstruction relationship with road users may be set to be smaller than a specific threshold change amount (=Value _threshold) for other road users/obstacles that do not have a driving obstruction relationship with road users. Alternatively, a specific threshold change (=Value_threshold) for obstacles/other road users that have a driving obstruction relationship with road users may be set to 0. That is, even if there is no mobility change of obstacles/other road users that has a driving obstruction relationship with a road user, the sensor data sharing message may include object information about the obstacle/other road user.

Alternatively, when object A and object B are road users and/or road users and obstacles that are in a driving obstruction relationship with each other, object information about object A and object B needs to always be included together in the same sensor data sharing message (triggered by satisfaction of conditions A to D of "1-(1)" described above).

Alternatively, when object A and object B are road users and/or road users and obstacles in a driving obstruction relationship with each other, the UE/infrastructure/server/cloud/MEC/RSU may transmit the sensor data sharing message that necessarily includes object information about object A and object B and information about the driving obstruction relationship, regardless of the conditions A to D of "1-(1)" described above.

5. Among the receiving UEs (e.g., vehicles, VRUs, and robots) that have received a sensor data sharing message for two objects in a driving obstruction relationship by the method described in "1" to "4", at least one receiving UE that determines that there is a road user approaching it, or that it interferes with/obstructs the passage of another road user, or that its passage is expected to be interfered with/obstructed by another road user, may perform the following operations. Alternatively, when a driving obstruction object (obstacle) is identified among the objects included in the sensor data sharing message, the receiving UE may perform the following operations to avoid the driving obstruction object.
(1) At least one receiving UE may analyze/judge a method for avoiding interference/obstruction included in a message of the UE/infrastructure/server/cloud/MEC/RSU (hereinafter, according to (2) to (4)) based on the information/algorithm below.
   - Information on interference/obstacles included in the sensor data sharing message, information on interference/obstacles obtained from the user's own sensors, and/or AI/ML algorithms of the UE, and the like
(2) At least one receiving UE may generate/transmit a message requesting a change in the type/lane and/or path of the road on which the receiving UE is supposed to drive (e.g., moving from sidewalk to shoulder/road, changing lanes on the road, changing paths) and/or a change in the type/lane and/or path of the road on which the receiving UE is supposed to drive (in which interference/obstruction is expected) to a counterpart object/road user expected to obstruct/interfere with its own traffic. In this case, at least one receiving UE may generate/transmit a message including its own changed path information. For example, the at least one receiving UE may generate/transmit a message in which changed path information is expressed in the form of path prediction (path point information for a future location and time information indicating the location of the path point at a future point in time) defined in ETSI VAM and SAE PSM.
(3) At least one receiving UE may transmit a warning message to a counterpart UE (or road user) with a possibility of collision/interference/driving obstruction when the following specific conditions are satisfied.
   - ① When the distance or TTC and/or TTO of two objects that are likely to cause interference/obstruction is less than or equal to a (pre-set) specific level, ② when there is no (static) object that physically separates a space in which two objects (e.g., obstacles or road users) exist, such as a median strip or a barrier for dividing a sidewalk and a roadway, ③ when one of the two objects is a pedestrian (/wheelchair) and the other is a vehicle such as a car/bicycle/motorcycle or a robot, ④ when two objects (e.g., obstacles or road users) drive in the direction of facing each other or when the absolute/relative speed is greater than or equal to a specific level
(4) At least one receiving UE generates/transmits a message requesting that it stop/hold its entry into a specific zone/lane/road, and/or that an opposing road user/object expected to obstruct/interfere with its passage stop/hold its entry into a specific zone/lane/road (in which interference/obstruction is expected).
(5) At least one receiving UE generates/transmits a message requesting adjustment of its own driving speed/direction/acceleration, and the like (to avoid getting closer to a pedestrian expected to obstruct traffic within a specific distance (preliminarily set)) or of an opposing UE/object expected to obstruct/interfere with its own traffic.

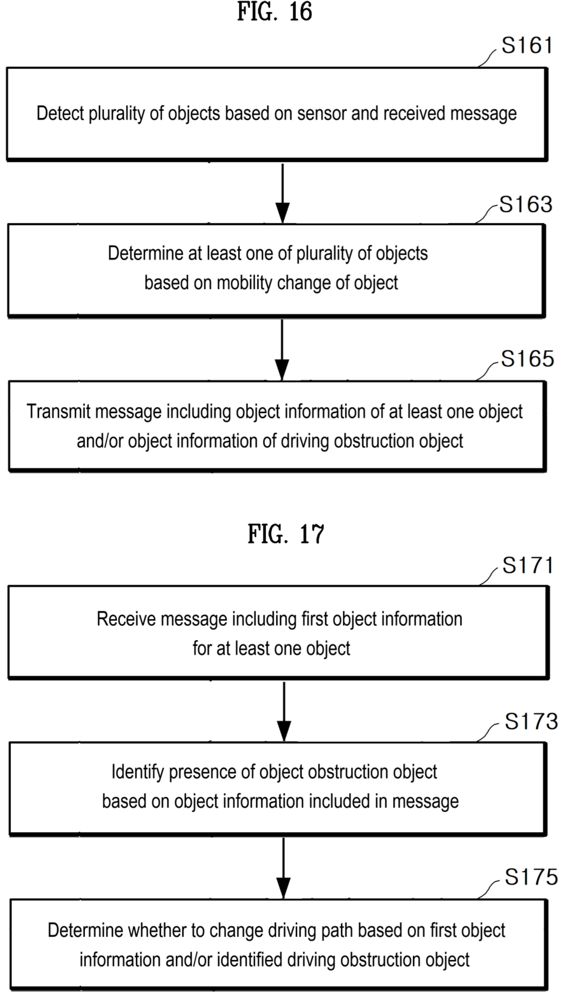

FIG. 16 is a diagram illustrating a method of transmitting a message including object information by a network.

Referring to FIG. 16, the network may detect a plurality of objects based on messages from sensors or peripheral devices (S161). The network may be any one of infrastructure/server/cloud/MEC, and the plurality of objects may include road user devices (e.g., vehicles, VRU devices, or V2X devices) located in a given geographic area (or on a road), road obstacles (road facilities, fallen objects, road construction sites, and other objects that obstruct the passage of road users), and/or roadside objects.

Then, the network may determine at least one object among the plurality of objects (to include object information in the message) (S163). As described above, the network may include object information for only some selected objects in the message, rather than object information for all of the detected plurality of objects. For example, the network may determine at least one object among the plurality of objects having a mobility change (e.g., location/distance change or speed) greater than or equal to a preset threshold (threshold distance or threshold speed). In other words, the network may reduce the signaling load of the message by excluding object information about objects among the plurality of objects having a mobility change less than the specific threshold from the message.

Then, the network may transmit a message including object information about the at least one object (S165). Here, the message may be a warning message warning of a collision, or the like or a sensor data sharing message. For example, as described above, the network may transmit the warning message or sensor data sharing message by considering "at least one of the conditions defined in 1-(1)." Alternatively, the network may transmit a sensor data sharing message when one of the two objects satisfying the conditions A or B defined in 1-(1) is the obstacle.

As described in sections "2", "3" and "4", the network may further include in the message object information about at least one object having a mobility change greater than or equal to the specific threshold, as well as object information about a driving obstruction object that may obstruct driving of one or more of the at least one object.

In detail, the network may predict/detect two or more objects having a driving obstruction relationship among the plurality of objects. The network may determine/predict whether driving of one object among the plurality of objects is obstructed by presence (or occupancy on the road) of another object. For example, the plurality of objects may include a first object that is a road user device/UE and a second object that is a road obstacle (road facility, fallen objects, road construction sites, and other objects that obstruct the passage of road users), and a mobility change of the first object may be greater than or equal to a predetermined specific threshold, and a mobility change of the second object may be less than or equal to the predetermined specific threshold. The network may predict/determine that driving of the first object is obstructed by the second object when the probability of a change in the driving path of the first object due to the presence of the second object (or an obstacle) is greater than a specific threshold probability based on information about the mobility information and predicted path of the first object (e.g., information obtained through a message periodically transmitted by the first object or a message of another object including detection information of the first object). In this case, the network may exceptionally include object information about the second object in the message even if the second object has a mobility change less than the preset specific threshold.

Alternatively, the network may further include in the message driving obstruction information about the driving obstruction relationship between the first object and the second object, while additionally including object information about the second object in the message as an exception. For example, the network may further include in the message driving obstruction information indicating a first object associated with object information for the second object. Alternatively, the network may further include object information about the second object as extended/additional information to the object information of the first object. In contrast, if a change in the driving path of another object due to the presence of the second object is not predicted (i.e., if the probability of a change in the driving path of each of the at least one object due to the second object is less than the specific threshold probability), the network may not include object information about the second object in the message based on the change in mobility of the second object being less than the specific threshold probability.

Alternatively, transmission of the message may be triggered when a change in the driving path of the first object is predicted due to the presence of the second object. That is, in addition to the general trigger conditions of the sensor data sharing message, detection of the first object and the second object with which the driving obstruction relationship exists may be additionally defined as a trigger condition.

Alternatively, the network may include only a limited number of object information in the message, determined by the payload size of the message. In this case, the network may determine which objects to include object information in the message based on the priorities among predefined/set objects and the specific threshold. For example, if the number of the at least one object having a mobility change greater than the preset specific threshold and other objects in the driving obstruction relationship exceeds the number of objects that may be included in the message, the network may select/determine some of the objects based on the priority between the at least one object and the driving obstruction object. In this case, the priorities for the first and second objects (i.e., the driving obstruction objects) in the driving obstruction relationship may be set higher than the priorities for the remaining objects. That is, the network may include object information about the first object and the second object with the driving obstruction relationship in the message with priority over other objects based on the priority between the objects. Additionally, the network may always transmit object information about the first object and object information about the second object together in one message. As described above, object information for the second object may be additionally included in the message as extended/additional information to object information for the first object.

Alternatively, the network may determine/adjust a transmission cycle of the message based on whether the message includes object information about two objects in a driving obstruction relationship or whether the message includes driving obstruction information. For example, a message including the driving obstruction information may have a shorter transmission cycle than a message not including the driving obstruction information.

Alternatively, the network may further include at least one piece of information among a distance between the first object and the second object, a speed of the first object and the second object, a moving direction of the first object and the second object, a time-to-collision (TTC) between the first object and the second object, and a time-to-obstruction (TTO) between the first object and the second object in the message including object information about two objects (e.g., the first object and the second object) in a driving obstruction relationship.

As such, the proposed invention may exceptionally include object information about a specific object in the message when it is predicted that a situation will arise in which the driving of another object is obstructed by the specific object even if the specific object has a mobility change below the predetermined level. Alternatively, the proposed invention may minimize an increase in the signaling load of the message by exceptionally including in the message only specific objects for which the driving obstruction relationship is predicted among objects having a mobility change below the predetermined level. Alternatively, the proposed invention may easily identify the risk and need for a path change due to the presence of a specific object to surrounding road user devices/UEs based on whether the message includes additional object information about the specific object that is exceptional.

That is, even if there is a stationary object (obstacle, terrain, or rock), if it is predicted that the road user's path is supposed to be obstructed, a message including information about the road user and the object may be transmitted, thereby making surrounding vehicles/UEs clearly aware that the road user may change a path due to the stationary object based on that the message includes information about the stationary object.

FIG. 17 is a diagram for explaining a method of receiving a message including object information by a UE.

Referring to FIG. 17, the UE may receive a message including first object information for at least one object from a network/peripheral UE (S171). The message may, in principle, include object information for at least one object having a mobility change greater than or equal to a specific threshold as described above.

Then, when the message further includes second object information about a second object having a mobility change less than the specific threshold, the UE may determine/identify the second object as a driving obstruction object that obstructs driving of one or more objects among the at least one object (S173). For example, the object information included in the message may include mobility information such as movement speed for each object. The UE may identify a mobility change of each object based on the mobility information, and may determine whether object information for an object having an identified mobility change below a specific threshold is included. When the message further includes object information about an object (or a second object) having a mobility change below a specific threshold, the UE may recognize/identify that the second object is a driving obstruction object that obstructs the driving of at least one object (or the first object) among the at least one object.

Alternatively, the message may further include instruction information indicating the first object having driving to be obstructed by the second object. In this case, the UE may specify a first object that is in a driving obstruction relationship with the second object among the at least one object based on the instruction information included in the message. Alternatively, the message may further include driving obstruction information regarding driving obstruction of the first object by the second object. Alternatively, the message may further include at least one piece of information from among a distance between the first object and the second object in a driving obstruction relationship, a speed of the first object and the second object, a moving direction of the first object and the second object, a time-to-collision (TTC) between the first object and the second object, and a time-to-obstruction (TTO) between the first object and the second object. Alternatively, the UE may expect that when a message including the driving obstruction information is received, the message may be received at a shorter period than a message not including the driving obstruction information. For example, the UE may adjust a reception cycle for the message based on whether the message includes driving obstruction information. Alternatively, the UE may receive a message including information related to a driving obstruction relationship according to the method described in "2" to "4" above.

Then, the UE may determine whether to change its driving path based on first object information about the at least one object and second object information identified as the driving obstruction object (S175). For example, the UE may identify object information about a first object of which driving is obstructed by a second object, which is the driving obstruction object, among the first object information. The UE may determine whether to change its own driving path to avoid the second object based on the location/size, and the like of the second object (obstacle) that is the driving obstruction object, or may determine whether to change its own driving path by considering the possibility of the first object changing its driving path.

As such, the UE may easily identify that the object is a driving obstruction object based on that the message exceptionally includes object information about an object with a mobility change less than a specific threshold, and may recognize that avoidance driving is required for the driving obstruction object.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

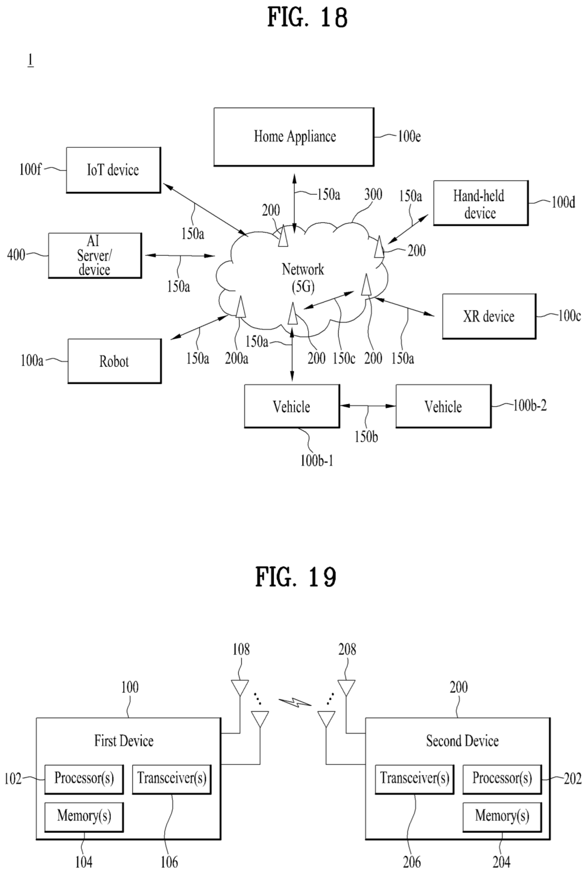

FIG. 18 illustrates a communication system applied to the present disclosure.

Referring to FIG. 18, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 19 illustrates a wireless device applicable to the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

In detail, the first wireless device or UE 100 may include the processor 102 and memory 104 connected to the transceiver 106. The memory 104 may include at least one program for performing operations related to the embodiments described in sections "1" to "4" and FIGS. 16 to 17.

The processor 102 may control the transceiver 106 to receive from the network a message including first object information about at least one object having a mobility change greater than or equal to a specific threshold, and based on the message further including second object information about a second object having a mobility change less than the specific threshold, determine the second object as a driving obstruction object and determine whether to change a driving path based on the first object information and the second object information.

Alternatively, a processing device may be configured to control the UE including the processor 102 and the memory 104. The processing device may include at least one processor and at least one memory connected to the at least one processor and storing instructions, wherein the instructions, based on being executed by the at least one processor, cause the UE to: receive from a network a message including first object information about at least one object having a mobility change greater than or equal to a specific threshold; determine the second object as a driving obstruction object based on the message further including second object information about a second object having a mobility change less than the specific threshold; and determine whether to change a driving path based on the first object information and the second object information.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

In detail, the second wireless device or network 200 may include the processor 202 and memory 204 connected to the transceiver 206. The memory 204 may include at least one program for performing operations related to the embodiments described in sections "1" to "4" and FIGS. 16 to 17.

For example, the second wireless device 200 or the network may control the transceiver 206 to detect a plurality of objects including a first object and a second object based on a received message or sensing data obtained using a sensor (not shown), determine at least one object having a mobility change greater than or equal to a specific threshold from among the plurality of objects, and transmit a message including object information about the at least one object including the first object. Here, based on the probability that the first object changes its driving path due to the second object being greater than or equal to a specific threshold probability, the message may further include object information about the second object even if the mobility change of the second object is less than the specific threshold probability.

Alternatively, the processing device may be configured to control the network including the processor 202 and the memory 204. The processing device may include at least one processor and at least one memory connected to the at least one processor and storing instructions, wherein the instructions, based on being executed by the at least one processor, cause the network to: detect a plurality of objects including a first object and a second object, determine at least one object having a mobility change greater than or equal to a specific threshold from among the plurality of objects, and transmit a message including object information about the at least one object including the first object. Here, based on the probability that the first object changes its driving path due to the second object being greater than or equal to a specific threshold probability, the message may further include object information about the second object even if the mobility change of the second object is less than the specific threshold probability.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

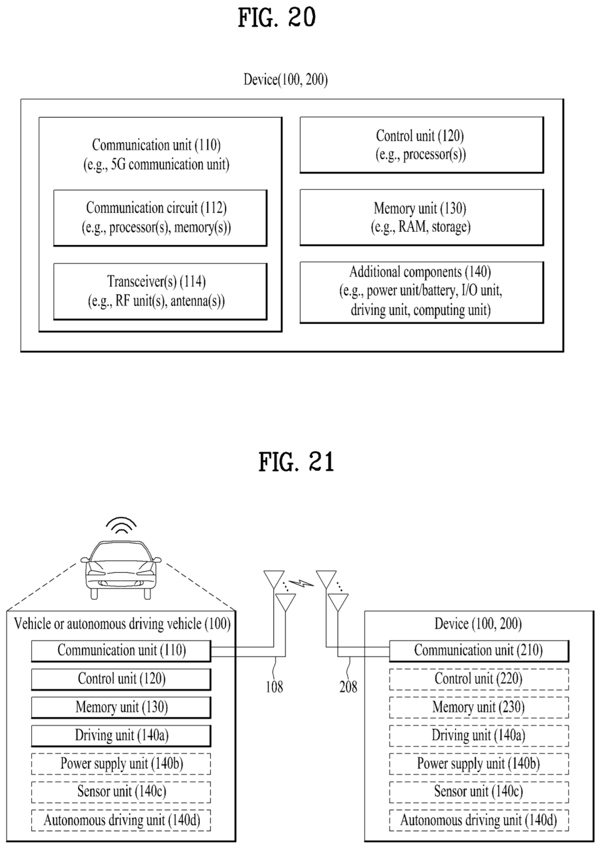

FIG. 20 illustrates another example of a wireless device applied to the present disclosure. The wireless device may be implemented in various forms according to a use-case/service (refer to FIG. 18)

Referring to FIG. 20, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 21 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 21, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultraacoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

### Industrial Applicability

The above-described embodiments of the present disclosure are applicable to various mobile communication systems.

## Claims

1. A method of transmitting a message by a network in a wireless communication system, the method comprising:
detecting a plurality of objects including a first object and a second object;
determining at least one object having a mobility change greater than or equal to a specific threshold from among the plurality of objects; and
transmitting a message including object information for the at least one object including the first object,
wherein, based on a probability that the first object changes a driving path due to the second object being greater than or equal to a specific threshold probability, the message further includes object information for the second object even if the mobility change of the second object is less than the specific threshold probability.

2. The method of claim 1, wherein the message further includes driving obstruction information indicating that the first object is in a driving obstruction relationship with the second object as confirmation information of object information for the first object.

3. The method of claim 1, wherein object information for the second object is included in the message as extended information of object information for the first object.

4. The method of claim 1, wherein transmission of the message is triggered based on a probability of a driving path of the first object being changed by the second object being greater than or equal to the specific threshold probability.

5. The method of claim 1, wherein the at least one object is determined based on the specific threshold probability and priority between objects, and
based on a probability of a change in a driving path of the first object by the second object being greater than or equal to the specific threshold probability, priorities for the first object and the second object are set relatively higher than priorities for remaining objects excluding the first object and the second object among the plurality of objects.

6. The method of claim 2, wherein a period of the message is determined based on a probability of the driving path of the first object being changed by the second object being greater than or equal to the specific threshold probability.

7. The method of claim 1, wherein the first object is a device of a road user, and the second object is an obstacle located on a road.

8. The method of claim 1, wherein the message further includes at least one piece of information among a distance between the first object and the second object, a speed of the first object and the second object, a moving direction of the first object and the second object, a time-to-collision (TTC) between the first object and the second object, or a time-to-obstruction (TTO) between the first object and the second object.

9. The method of claim 1, wherein, based on a probability of a change in a driving path of the first object by the second object being greater than or equal to the specific threshold probability, object information for the first object and object information for the second object are always included together in one message.

10. A computer-readable recording medium recording a program for performing the method of claim 1.

11. A network for transmitting a message in a wireless communication system, the network comprising:
a radio frequency (RF) transceiver; and
a processor connected to the RF transceiver,
wherein the processor detects a plurality of objects including a first object and a second object, determines at least one object having a mobility change greater than or equal to a specific threshold from among the plurality of objects, and transmits a message including object information for the at least one object including the first object, and
based on a probability that the first object changes a driving path due to the second object being greater than or equal to a specific threshold probability, the message further includes object information for the second object even if the mobility change of the second object is less than the specific threshold probability.

12. A processing device for controlling a network for transmitting a message in a wireless communication system, the processing device comprising:
at least one processor; and
at least one memory connected to the at least one processor and storing instructions, the instructions being executed by the at least one processor to cause the network to detect a plurality of objects including a first object and a second object, determine at least one object having a mobility change greater than or equal to a specific threshold from among the plurality of objects, and transmit a message including object information for the at least one object including the first object, and
based on a probability that the first object changes a driving path due to the second object being greater than or equal to a specific threshold probability, the message further includes object information for the second object even if the mobility change of the second object is less than the specific threshold probability.

13. A method of receiving a message by a user equipment (UE) in a wireless communication system, the method comprising:
receiving from a network a message including first object information for at least one object having a mobility change greater than or equal to a specific threshold;
based on the message further including second object information for the second object having a mobility change less than the specific threshold, determining the second object as a driving obstruction object; and
determining whether to change a driving path based on the first object information and the second object information.

14. A computer-readable recording medium recording a program for performing the method of claim 13.

15. A user equipment (UE) for receiving a message in a wireless communication system, the UE comprising:
a radio frequency (RF) transceiver; and
a processor connected to the RF transceiver,
wherein the processor controls the RF transceiver to receive from a network a message including first object information for at least one object having a mobility change greater than or equal to a specific threshold, and based on the message further including second object information for a second object having a mobility change less than the specific threshold, determine the second object as a driving obstruction object and determine whether to change a driving path based on the first object information and the second object information.

16. A processing device for controlling a user equipment (UE) receiving a message in a wireless communication system, the processing device comprising:
at least one processor; and
at least one memory connected to the at least one processor and storing instructions, the instructions being executed by the at least one processor to cause the UE to receive from a network a message including first object information for at least one object having a mobility change is greater than or equal to a specific threshold, determine the second object as a driving obstruction object based on the message further including second object information for a second object having a mobility change is less than the specific threshold, and determine whether to change a driving path based on the first object information and the second object information.
